# FASCICULE DE BREVET EUROPEEN

(11) **EP 3 109 517 B1**
(45) Date de publication et mention de la délivrance du brevet: **04.09.2019**
(21) Numéro de dépôt: 16175877.6
(22) Date de dépôt: 23.06.2016
(51) Int. Cl.: F16J 15/06

(54) **DISPOSITIF DE FIXATION D'AU MOINS UN FAISCEAU ELECTRIQUE SUR UN CARTER**
BEFESTIGUNGSVORRICHTUNG MINDESTENS EINES KABELBÜNDELS AUF EINEM GEHÄUSE
DEVICE FOR ATTACHING AT LEAST ONE ELECTRICAL HARNESS TO A HOUSING

(30) Priorité: 23.06.2015 FR 1555765
(43) Date de publication de la demande: 28.12.2016
(73) Titulaire: Renault S.A.S., 92100 Boulogne-Billancourt (FR)
(72) Inventeur: CARBON, Alain, 78955 CARRIERES SOUS POISSY (FR); VINCENT, Franck, CHEVREUSE 78460 (FR)

(56) Documents cités:
- EP-A1- 2 388 464
- DE-A1- 10 105 625

## Description

### Domaine technique de l'invention

L'invention concerne le domaine technique d'un dispositif de fixation d'au moins un faisceau électrique sur un carter comprenant un joint d'étanchéité, notamment sous la forme d'un joint plat, destiné à assurer une étanchéité pour un fluide à l'interface entre des première et deuxième pièces d'un carter lorsque les première et deuxième pièces sont fixées l'une à l'autre.

En particulier mais non exclusivement, le domaine particulier visé est celui où le carter est un bloc moteur pour véhicule automobile, le fluide est de l'huile de lubrification d'un attelage mobile interne au bloc moteur et les deux pièces sont constituées par un carter cylindre et par un carter d'huile.

L'invention a pour objet également un agencement pour véhicule automobile, comprenant un carter, notamment de type bloc-moteur, ayant des première et deuxième pièces fixées l'une à l'autre de sorte à renfermer un fluide dans un milieu intérieur au carter, notamment de l'huile pour lubrifier l'attelage mobile implanté dans le carter, au moins un organe fonctionnel situé dans le milieu intérieur, et au moins un tel joint d'étanchéité. Elle concerne aussi un véhicule automobile et un procédé de montage d'un tel agencement.

### État de la technique

Dans le domaine des véhicules automobiles, il est connu d'avoir recours à un moteur nécessitant l'utilisation d'une pompe à huile pilotée électroniquement via des signaux reçus et/ou émis en liaison avec un câblage électrique à bord du véhicule. Une telle pompe à huile dispose classiquement d'un mini faisceau électrique et d'une connectique devant se raccorder avec le câblage électrique du véhicule.

La pompe à huile pilotée se trouve dans le milieu interne au moteur tandis que le câblage électrique du véhicule est situé à l'extérieur du moteur. Ainsi, il existe une problématique de permettre de raccorder simplement et efficacement la pompe à huile pilotée au câblage électrique du véhicule en traversant le carter du moteur.

A proximité immédiate de la pompe à huile pilotée se trouvent des volumes tournants tels que le vilebrequin, des bielles ou des arbres d'équilibrage par exemple. Il est donc nécessaire de garantir une distance de sécurité entre le faisceau électrique de la pompe à huile pilotée et ces volumes tournants afin de garantir l'intégrité du système durant le fonctionnement du moteur.

Il est nécessaire de trouver une solution pour faire cheminer un faisceau électrique et sa connectique, à partir de la pompe à huile pilotée jusqu'au câblage du véhicule, de l'intérieur vers l'extérieur du moteur, sans compromettre l'étanchéité, tout en étant compatible avec l'architecture interne et externe du moteur et avec les différentes contraintes de montage et de démontage. Le document DE10105625-A1 décrit un dispositif de fixation d'un faisceau électrique à un joint d'étanchéité. Une solution existante consiste à laisser le câblage libre. Néanmoins dans ce cas, l'implantation de la connectique vers l'extérieur du moteur est contrainte pour minimiser la longueur du faisceau électrique et ainsi lever lever les différents risques liés à l'architecture, en particulier le fait que le parcours ne doit pas être situé à proximité des volumes tournants. Il existe un besoin de lever cette contrainte.

Bien que les problématiques sont présentées ici en relation avec un moteur de véhicule automobile et un organe fonctionnel constitué par une pompe à huile pilotée, elles peuvent indifféremment toucher d'autres types de carter et d'autres types d'organes fonctionnels, comme des moteurs industriels ou des turbines par exemple.

### Objet de l'invention

Le but de la présente invention est de proposer une solution technique qui remédie aux inconvénients et aux problématiques listés ci-dessus.

Dans ce dessein, l'invention concerne un dispositif de fixation d'au moins un faisceau électrique sur un carter, le faisceau électrique étant destiné à la connexion électrique à travers le carter entre un organe fonctionnel situé dans un milieu intérieur délimité par le carter et un câblage électrique agencé dans un milieu extérieur au carter, le dispositif comprenant un joint d'étanchéité, notamment sous la forme d'un joint plat, destiné à assurer une étanchéité pour un fluide à l'interface entre des première et deuxième pièces d'un carter lorsque les première et deuxième pièces sont fixées l'une à l'autre, le joint d'étanchéité comprenant, sur tout ou partie de sa longueur, des éléments de maintien configurés de sorte à pouvoir assurer le maintien de tout ou partie du faisceau électrique dans un logement de réception formé dans l'une au moins desdites première et deuxième pièces.

Dans d'autres modes de réalisation :
- les éléments de maintien sont configurés de sorte à assurer un maintien démontable du faisceau électrique dans le logement ;
- les éléments de maintien sont agencés de sorte à maintenir au moins une partie du faisceau électrique du côté du milieu intérieur au carter ;
- le joint d'étanchéité délimite une première partie configurée pour assurer la fonction d'étanchéité pour le fluide à l'interface entre les première et deuxième pièces du carter et une deuxième partie constitutive des éléments de maintien, les première et deuxième parties du joint d'étanchéité étant formées dans une pièce unique pour former un ensemble d'un seul tenant ;
- tout ou partie des première et deuxième parties du joint d'étanchéité sont formées dans une matière métalloplastique, et
- les éléments de maintien comprennent des languettes s'étendant latéralement dans le prolongement de la première partie du joint d'étanchéité et échelonnées le long de tout ou partie de la longueur du joint d'étanchéité considérée au niveau de l'interface entre les première et deuxième pièces du carter fixées l'une à l'autre.

L'invention concerne également un agencement pour véhicule automobile, comprenant un carter, notamment de type bloc-moteur, ayant des première et deuxième pièces fixées l'une à l'autre de sorte à renfermer un fluide dans un milieu intérieur au carter, notamment de l'huile pour lubrifier un attelage mobile situé dans le milieu intérieur, au moins un organe fonctionnel situé dans le milieu intérieur, au moins un dispositif de fixation d'au moins un faisceau électrique sur un tel carter, et au moins un faisceau électrique maintenu par les éléments de maintien du joint d'étanchéité dans le logement de réception et connecté électriquement à l'organe fonctionnel et à un câblage électrique du véhicule automobile agencé dans un milieu extérieur au carter pour assurer une connexion électrique à travers le carter entre l'organe fonctionnel et le câblage électrique.

Dans d'autres modes de réalisation :
- l'organe fonctionnel est constitué par une pompe à huile pilotée électroniquement ayant un élément émetteur et/ou récepteur de signaux électroniques transmis entre la pompe et le câblage électrique du véhicule automobile par l'intermédiaire dudit au moins un faisceau électrique ;
- le faisceau électrique comprend des premiers éléments de connexion électrique agencés au niveau du milieu extérieur au carter et configurés de sorte à permettre une connexion électrique entre le faisceau électrique et le câblage électrique du véhicule automobile ;
- le faisceau électrique comprend des deuxièmes éléments de connexion électrique agencés au niveau du milieu intérieur du carter et configurés de sorte à permettre une connexion électrique entre le faisceau électrique et l'organe fonctionnel, et
- le carter est un bloc-moteur dont la première pièce est un carter cylindre et dont la deuxième pièce est un carter d'huile.

L'invention concerne aussi un véhicule automobile comprenant au moins un tel agencement et un câblage électrique extérieur au carter et connecté électriquement à l'organe fonctionnel par l'intermédiaire dudit au moins un faisceau électrique maintenu par les éléments de maintien du joint d'étanchéité dans le logement de réception.

L'invention concerne également un procédé de montage d'un tel agencement, comprenant les étapes suivantes :
- mise en position du carter cylindre dans une position dans laquelle sa face inférieure, constitutive de l'interface avec le carter d'huile, est orientée vers le haut,
- montage de l'organe fonctionnel dans le carter cylindre,
- positionnement du faisceau électrique dans le logement de réception,
- positionnement du joint d'étanchéité au niveau de la face inférieure du carter cylindre et maintien du faisceau électrique dans le logement de réception en utilisant les éléments de maintien,
- connexion électrique du faisceau électrique avec l'organe fonctionnel,
- mise en position et fixation du carter d'huile avec le carter cylindre.

### Description sommaire des dessins

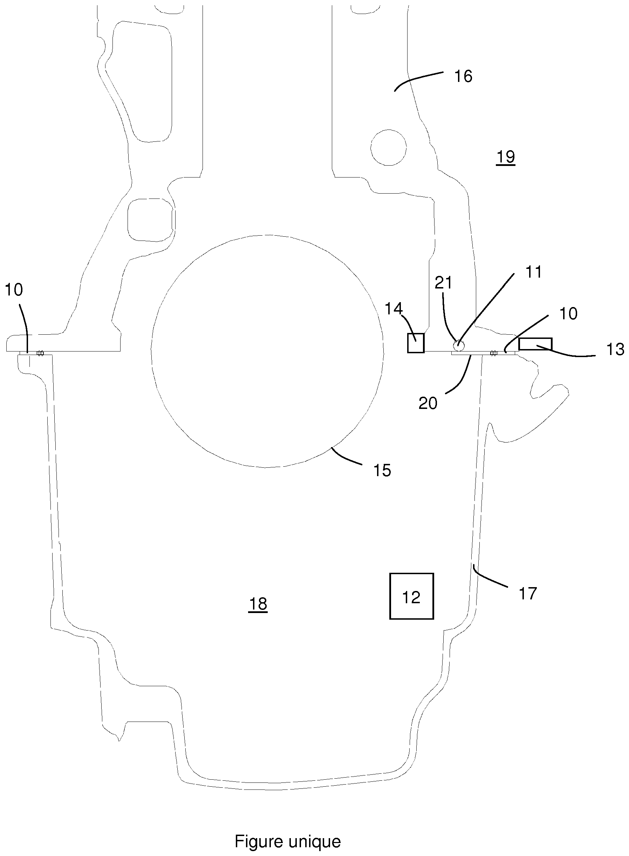

D'autres avantages et caractéristiques ressortiront plus clairement de la description qui va suivre de modes particuliers de réalisation de l'invention donnés à titre d'exemples non limitatifs et représentés sur la figure unique qui est une vue en coupe, de côté, d'une partie d'un exemple d'agencement selon un aspect de l'invention.

### Description de modes préférentiels de l'invention

En référence à la figure unique susmentionnée et qui est annexée, l'invention concerne essentiellement, selon un premier aspect, un joint d'étanchéité 10 destiné à assurer une étanchéité pour un fluide à l'interface entre des première et deuxième pièces 16 et 17 d'un carter lorsque les première et deuxième pièces 16, 17 sont fixées l'une à l'autre. Le joint d'étanchéité 10 est sous la forme d'un joint plat, ce qui est particulièrement efficace à l'interface entre deux pièces d'un bloc-moteur par exemple, pour l'étanchéité à l'encontre d'un fluide liquide tel que de l'huile de lubrification.

Selon une caractéristique importante, le joint d'étanchéité 10 comprend, sur tout ou partie de sa longueur, des éléments de maintien 20 configurés de sorte à pouvoir assurer le maintien de tout ou partie d'au moins un faisceau électrique 11 dans un logement de réception 21 formé dans l'une au moins desdites première et deuxième pièces 16, 17. Le faisceau électrique 11 est configuré pour assurer une connexion électrique à travers le carter entre un organe fonctionnel 12 situé dans un milieu intérieur 18 délimité par le carter et un câblage électrique (non représenté) agencé dans un milieu extérieur 19 au carter.

Dans l'exemple illustré, le logement de réception est agencé sous la forme d'un creux ou d'une cavité formée dans la face inférieure de la pièce repérée 16.

Le logement 21 est à titre d'exemple une rainure ménagée dans un carter cylindre au niveau d'une face de ce carter qui est destinée à coopérer avec un carter d'huile. Plus particulièrement, la première pièce 16 est un carter cylindre qui comprend une face inférieure qui est destinée à venir à recouvrement d'un carter d'huile situé alors verticalement dessous, selon un contact contre une face supérieure du carter d'huile formant ladite seconde pièce 17. Le logement 21 est un évidement de dimension sensiblement identique à celle du faisceau, aux jeux de montage près, ce qui permet un montage en force du faisceau électrique 11.

Le logement 21 s'étend sur une partie de la face inférieure du carter cylindre qui n'est pas agencée à recouvrement par le carter d'huile.

La face inférieure du carter cylindre est d'épaisseur plus importante à la face supérieure du carter d'huile de telle sorte qu'après agencement des carter cylindre et d'huile, le logement 21 est libre d'accès.

Afin de maintenir le faisceau, les éléments de maintien 20 qui s'étendent sur tout ou partie de la longueur du joint d'étanchéité 10, vient à recouvrement du logement 21 lorsque le joint d'étanchéité 10 est monté entre les carters cylindre et d'huile. Ainsi, chacun des éléments de maintien 20 s'étend de manière sensiblement tangente au faisceau électrique 11.

Selon un mode de réalisation particulier, les éléments de maintien 20 sont configurés de sorte à assurer un maintien démontable du faisceau électrique 11 dans le logement de réception 21. Cela présente l'avantage d'offrir la possibilité d'intervention sur le faisceau électrique 11 durant sa durée de vie, par exemple pour un remplacement en cas de nécessité.

Comme cela est illustré sur la figure unique annexée, les éléments de maintien 20 sont agencés de sorte à maintenir au moins une partie du faisceau électrique 11 du côté du milieu intérieur 18 au carter.

De préférence mais sans toutefois conférer une quelconque limitation quant à la liberté de conception du joint d'étanchéité 10, celui-ci délimite une première partie configurée pour assurer la fonction d'étanchéité pour le fluide à l'interface entre les première et deuxième pièces 16, 17 du carter et une deuxième partie constitutive des éléments de maintien 20. Les première et deuxième parties du joint d'étanchéité 10 sont formées dans une pièce unique pour former un ensemble d'un seul tenant. Cette pièce unique peut être obtenue en une seule et même opération, par exemple consistant à injecter une matière telle qu'un élastomère dans un moule adapté.

Dans une variante particulièrement adaptée au domaine des véhicules automobiles, en particulier dans le cadre de l'étanchéité fluidique au niveau de l'interface entre deux pièces d'un bloc-moteur, tout ou partie des première et deuxième parties du joint d'étanchéité 10 sont formées dans une matière métalloplastique.

La matière métalloplastique comprend notamment une matière métallique comme de la tôle par exemple et une matière élastomère d'origine naturelle ou synthétique et ayant des propriétés d'élasticité. Cette nature de matière présente l'avantage d'une bonne efficacité d'étanchéité et d'une bonne résistance thermique et mécanique. Facultativement, la matière métalloplastique peut comprendre une matière plastique. L'avantage de cette solution est d'augmenter la robustesse.

A titre d'exemple, la fabrication du joint d'étanchéité 10 peut se faire par une opération de découpage d'une tôle de métal incluant des languettes formant au final les éléments de maintien 20 puis une opération de mise en place dans une presse à injection de la tôle ainsi découpée afin de réaliser une opération de surmoulage par l'élastomère. En variante, la fabrication du joint d'étanchéité 10 peut se faire par une opération de découpage d'une tôle de métal dépourvue de telles languettes, puis une opération de mise en place de cette tôle ainsi découpée dans une presse à injection en vue d'un surmoulage des languettes dans une matière plastique adaptée, puis une opération de mise en place du résultat de l'opération précédente dans une presse à injection afin de surmouler l'ensemble par la matière élastomère.

Ainsi, un mode de réalisation conférant une bonne efficacité et une facilité de fabrication et d'utilisation pour un coût réduit prévoit que les éléments de maintien 20 comprennent une pluralité de languettes s'étendant latéralement (i.e. perpendiculairement à la direction définissant la longueur du joint 10) dans le prolongement de la première partie du joint d'étanchéité 10 et échelonnées le long de tout ou partie de la longueur du joint d'étanchéité 10 considérée au niveau de l'interface entre les première et deuxième pièces 16, 17 du carter fixées l'une à l'autre. Cette organisation offre un maintien régulier du faisceau électrique 11 sur toute la partie de sa longueur située au niveau de cette interface.

Sur la figure, l'agencement pour véhicule automobile comprend :
- un carter, notamment de type bloc-moteur, ayant les première et deuxième pièces 16, 17 fixées l'une à l'autre de sorte à renfermer le fluide dans le milieu intérieur 18 au carter,
- au moins un tel organe fonctionnel 12 situé dans le milieu intérieur 18,
- au moins un tel joint d'étanchéité 10,
et au moins un faisceau électrique 11 maintenu par les éléments de maintien 20 du joint d'étanchéité 10 dans le logement de réception 21 et connecté électriquement à l'organe fonctionnel 12 et à un câblage électrique (non représenté) du véhicule automobile agencé dans un milieu extérieur 19 au carter pour assurer une connexion électrique à travers le carter entre l'organe fonctionnel 12 et le câblage électrique.

Le fluide vis-à-vis duquel le joint d'étanchéité 10 remplit sa fonction d'étanchéité peut notamment être de l'huile apte à lubrifier un attelage mobile 15 implanté dans le carter, c'est-à-dire dans le milieu intérieur 18.

L'attelage mobile 15 comprend par exemple un vilebrequin, des bielles, des arbres d'équilibrage...

Ainsi, il sera possible de fournir un véhicule automobile comprenant au moins un tel agencement et un câblage électrique extérieur au carter et connecté électriquement à l'organe fonctionnel 12 par l'intermédiaire dudit au moins un faisceau électrique 11 maintenu par les éléments de maintien 20 du joint d'étanchéité 10 dans le logement de réception 21.

Selon un mode de réalisation particulier, l'organe fonctionnel 12 est notamment constitué par une pompe à huile pilotée électroniquement ayant un élément émetteur et/ou récepteur de signaux électroniques transmis entre la pompe et le câblage électrique du véhicule par l'intermédiaire dudit au moins un faisceau électrique 11.

Le faisceau électrique 11 comprend des premiers éléments de connexion électrique 13 agencés au niveau du milieu extérieur 19 au carter et configurés de sorte à permettre une connexion électrique entre le faisceau électrique 11 et le câblage électrique du véhicule. Les premiers éléments de connexion électrique 13 peuvent notamment être configurés de sorte à pouvoir supprimer cette connexion électrique lorsque cela est nécessaire, puis à pouvoir la rendre active à nouveau à souhait. Les premiers éléments de connexion électrique 13 sont de nature quelconque dès lors qu'elle est adaptée à la fonction recherchée.

Selon un mode de réalisation tel qu'illustré, le faisceau électrique 11 comprend des deuxièmes éléments de connexion électrique 14 agencés au niveau du milieu intérieur 18 du carter et configurés de sorte à permettre une connexion électrique entre le faisceau électrique 11 et l'organe fonctionnel 12. Les deuxièmes éléments de connexion électrique 14 peuvent notamment être configurés de sorte à pouvoir supprimer cette connexion électrique lorsque cela est nécessaire, puis à pouvoir la rendre active à nouveau à souhait. Les deuxièmes éléments de connexion électrique 14 sont de nature quelconque dès lors qu'elle est adaptée à la fonction recherchée et sont distincts des premiers éléments de connexion électrique 13.

En particulier, il est envisageable d'aménager les premiers éléments de connexion électrique 13 et les deuxièmes éléments de connexion électrique 14 respectivement aux deux extrémités opposées du faisceau électrique 11 dont le corps qui est positionné dans le logement de réception 21, à un endroit de sa longueur, est destiné à traverser l'épaisseur du carter au niveau de l'interface entre les deux pièces 16, 17.

Alternativement, le faisceau électrique 11 maintenu dans le logement de réception 21 par l'intermédiaire des éléments de maintien 20 solidaires du joint d'étanchéité 10 peut venir directement avec l'organe fonctionnel 12 sans connexion électrique séparable entre ces deux éléments. Cette solution alternative favorise le contact électrique au détriment de l'aspect logistique et de la facilité du processus de montage en usine.

Le procédé de montage de l'agencement précédemment décrit peut alors se pratiquer de manière très simple en réalisant les étapes suivantes :
- mise en position du carter cylindre (correspondant ici à la première pièce 16) dans une position dans laquelle sa face inférieure, constitutive de l'interface avec le carter d'huile (correspondant ici à la deuxième pièce 17), est orientée vers le haut,
- montage de l'organe fonctionnel 12 dans le carter cylindre,
- positionnement du faisceau électrique 11 dans le logement de réception 21,
- positionnement du joint d'étanchéité 10 au niveau de la face inférieure du carter cylindre,
- connexion électrique du faisceau électrique 11 avec l'organe fonctionnel 12, notamment via les deuxièmes éléments de connexion électrique 14 lorsqu'ils sont prévus,
- positionnement et maintien du faisceau électrique 11 dans le logement de réception 21 en utilisant les éléments de maintien 20,
- mise en position et fixation du carter d'huile avec le carter cylindre.

La solution présentée dans ce document permet de faire cheminer un faisceau électrique 11 et sa connectique, à partir d'une pompe à huile pilotée jusqu'au câblage électrique du véhicule, de l'intérieur vers l'extérieur du moteur, sans compromettre l'étanchéité, tout en étant compatible avec l'architecture interne et externe du moteur et avec les différentes contraintes de montage et de démontage. Elle est adaptable à d'autres types de carter, d'organe fonctionnel ou de fluide...

## Revendications

1. Dispositif de fixation d'au moins un faisceau électrique (11) sur un carter, le faisceau électrique (11) étant destiné à la connexion électrique à travers le carter entre un organe fonctionnel (12) situé dans un milieu intérieur (18) délimité par le carter et un câblage électrique agencé dans un milieu extérieur (19) au carter, **caractérisé en ce qu'**il comprend un joint d'étanchéité (10), sous la forme d'un joint plat, destiné à assurer une étanchéité pour un fluide à l'interface entre des première et deuxième pièces (16, 17) d'un carter lorsque les première et deuxième pièces (16, 17) sont fixées l'une à l'autre, le joint d'étanchéité (10) comprenant, sur tout ou partie de sa longueur, des éléments de maintien (20) configurés de sorte à pouvoir assurer le maintien de tout ou partie du faisceau électrique (11) dans un logement de réception (21) formé dans l'une au moins desdites première et deuxième pièces (16, 17), le logement (21) étant un évidement de dimension sensiblement identique à celle du faisceau, aux jeux de montage près, ce qui permet un montage en force du faisceau électrique (11).

2. Dispositif de fixation selon la revendication 1, **caractérisé en ce que** les éléments de maintien (20) sont configurés de sorte à assurer un maintien démontable du faisceau électrique (11) dans le logement (21).

3. Dispositif de fixation selon l'une quelconque des revendications 1 ou 2, **caractérisé en ce que** les éléments de maintien (20) sont agencés de sorte à maintenir au moins une partie du faisceau électrique (11) du côté du milieu intérieur (18) au carter.

4. Dispositif de fixation selon l'une quelconque des revendications 1 à 3, **caractérisé en ce que** le joint d'étanchéité (10) délimite une première partie configurée pour assurer la fonction d'étanchéité pour le fluide à l'interface entre les première et deuxième pièces (16, 17) du carter et une deuxième partie constitutive des éléments de maintien (20), les première et deuxième parties du joint d'étanchéité (10) étant formées dans une pièce unique pour former un ensemble d'un seul tenant.

5. Dispositif de fixation selon la revendication 4, **caractérisé en ce que** tout ou partie des première et deuxième parties du joint d'étanchéité (10) sont formées dans une matière métalloplastique.

6. Dispositif de fixation selon l'une quelconque des revendications 1 à 5, **caractérisé en ce que** les éléments de maintien (20) comprennent des languettes s'étendant latéralement dans le prolongement de la première partie du joint d'étanchéité (10) et échelonnées le long de tout ou partie de la longueur du joint d'étanchéité (10) considérée au niveau de l'interface entre les première et deuxième pièces (16, 17) du carter fixées l'une à l'autre.

7. Agencement pour véhicule automobile, comprenant un carter, notamment de type bloc-moteur, ayant des première et deuxième pièces (16, 17) fixées l'une à l'autre de sorte à renfermer un fluide dans un milieu intérieur (18) au carter, notamment de l'huile pour lubrifier un attelage mobile (15) situé dans le milieu intérieur (18), au moins un organe fonctionnel (12) situé dans le milieu intérieur (18), au moins un dispositif de fixation d'au moins un faisceau électrique (11) sur un carter conforme à l'une quelconque des revendications précédentes, et au moins un faisceau électrique (11) monté en force dans un logement de réception (21) et maintenu par les éléments de maintien (20) du joint d'étanchéité (10) dans le logement de réception (21) et connecté électriquement à l'organe fonctionnel (12) et à un câblage électrique du véhicule automobile agencé dans un milieu extérieur (19) au carter pour assurer une connexion électrique à travers le carter entre l'organe fonctionnel (12) et le câblage électrique.

8. Agencement selon la revendication 7, **caractérisé en ce que** l'organe fonctionnel (12) est constitué par une pompe à huile pilotée électroniquement ayant un élément émetteur et/ou récepteur de signaux électroniques transmis entre la pompe et le câblage électrique du véhicule automobile par l'intermédiaire dudit au moins un faisceau électrique (11).

9. Agencement selon l'une quelconque des revendications 7 ou 8, **caractérisé en ce que** le faisceau électrique (11) comprend des premiers éléments de connexion électrique (13) agencés au niveau du milieu extérieur (19) au carter et configurés de sorte à permettre une connexion électrique entre le faisceau électrique (11) et le câblage électrique du véhicule automobile.

10. Agencement selon l'une quelconque des revendications 7 à 9, **caractérisé en ce que** le faisceau électrique (11) comprend des deuxièmes éléments de connexion électrique (14) agencés au niveau du milieu intérieur (18) du carter et configurés de sorte à permettre une connexion électrique entre le faisceau électrique (11) et l'organe fonctionnel (12).

11. Agencement selon l'une quelconque des revendications 7 à 10, **caractérisé en ce que** le carter est un bloc-moteur dont la première pièce (16) est un carter cylindre et dont la deuxième pièce (17) est un carter d'huile.

12. Véhicule automobile comprenant au moins un agencement selon l'une quelconque des revendications 7 à 11 et un câblage électrique extérieur au carter et connecté électriquement à l'organe fonctionnel (12) par l'intermédiaire dudit au moins un faisceau électrique (11) maintenu par les éléments de maintien (20) du joint d'étanchéité (10) dans le logement de réception (21).

13. Procédé de montage de l'agencement de la revendication 11, comprenant les étapes suivantes :
- mise en position du carter cylindre dans une position dans laquelle sa face inférieure, constitutive de l'interface avec le carter d'huile, est orientée vers le haut,
- montage de l'organe fonctionnel (12) dans le carter cylindre,
- positionnement du faisceau électrique (11) dans le logement de réception (21),
- positionnement du joint d'étanchéité (10) au niveau de la face inférieure du carter cylindre et maintien du faisceau électrique (11) préalablement monté en force dans le logement de réception (21) en utilisant les éléments de maintien (20),
- connexion électrique du faisceau électrique (11) avec l'organe fonctionnel (12),
- mise en position et fixation du carter d'huile avec le carter cylindre.

## Patentansprüche

1. Befestigungsvorrichtung mindestens eines Kabelbündels (11) auf einem Gehäuse, wobei das Kabelbündel (11) zur elektrischen Verbindung quer durch das Gehäuse zwischen einem funktionellen Organ (12), welches in einem internen Medium (18) angeordnet ist, das von dem Gehäuse begrenzt wird, und einer elektrischen Verdrahtung, die in einem Medium (19) extern von dem Gehäuse eingerichtet ist, bestimmt ist, **dadurch gekennzeichnet, dass** diese eine Dichtung (10) in der Form einer flachen Dichtung umfasst, die dazu bestimmt ist, eine Dichtheit für ein Fluid an der Grenzfläche zwischen dem ersten und zweiten Stück (16, 17) eines Gehäuses sicherzustellen, wenn das erste und zweite Stück (16, 17) aneinander befestigt sind, wobei die Dichtung (10), auf ihrer gesamten oder einem Teil ihrer Länge, Halteelemente (20) umfasst, die derart ausgelegt sind, dass sie den Halt des gesamten oder eines Teils des Kabelbündels (11) in einer Aufnahme (21) sicherstellen können, die in mindestens einem von dem ersten und zweiten Stück (16, 17) gebildet ist, wobei die Aufnahme (21) eine Ausnehmung mit einer Abmessung im Wesentlichen identisch mit jener des Bündels, mit einem engen Montagespielraum, ist, wodurch eine kraftschlüssige Montage des Kabelbündels (11) gestattet wird.

2. Befestigungsvorrichtung nach Anspruch 1, **dadurch gekennzeichnet, dass** die Halteelemente (20) derart ausgelegt sind, dass sie einen demontierbaren Halt des Kabelbündels (11) in der Aufnahme (21) sicherstellen.

3. Befestigungsvorrichtung nach einem der Ansprüche 1 oder 2, **dadurch gekennzeichnet, dass** die Halteelemente (20) derart eingerichtet sind, dass sie mindestens einen Teil des Kabelbündels (11) auf der Seite des Mediums (18) intern von dem Gehäuse halten.

4. Befestigungsvorrichtung nach einem der Ansprüche 1 bis 3, **dadurch gekennzeichnet, dass** die Dichtung (10) einen ersten Teil, der ausgelegt ist, um die Dichtheitsfunktion für das Fluid an der Grenzfläche zwischen dem ersten und zweiten Stück (16, 17) des Gehäuses sicherzustellen, und einen zweiten Teil, der die Halteelemente (20) bildet, begrenzt, wobei der erste und zweite Teil der Dichtung (10) in einem einzigen Stück gebildet sind, um eine Einheit einer einzelnen Komponente zu bilden.

5. Befestigungsvorrichtung nach Anspruch 4, **dadurch gekennzeichnet, dass** alle oder ein Teil des ersten und zweiten Teils der Dichtung (10) aus einem metallplastischen Material gebildet sind.

6. Befestigungsvorrichtung nach einem der Ansprüche 1 bis 5, **dadurch gekennzeichnet, dass** die Halteelemente (20) Zungen umfassen, die sich lateral in der Verlängerung des ersten Teils der Dichtung (10) erstrecken und entlang der gesamten oder eines Teils der Länge der betreffenden Dichtung (10) auf der Höhe der Grenzfläche zwischen dem ersten und zweiten Stück (16, 17) des Gehäuses aneinander befestigt gestaffelt sind.

7. Anordnung für ein Automobilfahrzeug, umfassend ein Gehäuse, insbesondere des Motorblock-Typs, mit einem ersten und zweiten Stück (16, 17), die aneinander befestigt sind, um ein Fluid in einem Medium (18) intern von dem Gehäuse einzuschließen, insbesondere ein Öl zum Schmieren einer beweglichen Kupplung (15), die im internen Medium (18) angeordnet ist, mindestens ein funktionelles Organ (12), das in dem internen Medium (18) angeordnet ist, mindestens eine Befestigungsvorrichtung mindestens eines Kabelbündels (11) auf einem Gehäuse nach einem der vorhergehenden Ansprüche, und mindestens ein Kabelbündel (11), das kraftschlüssig in einer Aufnahme (21) montiert ist und von den Halteelementen (20) der Dichtung (10) in der Aufnahme (21) gehalten wird und elektrisch mit dem funktionellen Organ (12) und mit einer elektrischen Verdrahtung des Automobilfahrzeugs verbunden ist, die in einem Medium (19) extern von dem Gehäuse eingerichtet ist, um eine elektrische Verbindung quer durch das Gehäuse zwischen dem funktionellen Organ (12) und der elektrischen Verdrahtung sicherzustellen.

8. Anordnung nach Anspruch 7, **dadurch gekennzeichnet, dass** das funktionelle Organ (12) aus einer elektronisch gesteuerten Ölpumpe mit einem Sender-und/oder Empfängerelement elektronischer Signale besteht, die zwischen der Pumpe und der elektrischen Verdrahtung des Automobilfahrzeugs mit Hilfe des mindestens einen Kabelbündels (11) übertragen werden.

9. Anordnung nach einem der Ansprüche 7 oder 8, **dadurch gekennzeichnet, dass** das Kabelbündel (11) erste Elemente (13) für eine elektrische Verbindung umfasst, die auf der Höhe des Mediums (19) extern von dem Gehäuse eingerichtet sind und ausgelegt sind, um eine elektrische Verbindung zwischen dem Kabelbündel (11) und der elektrischen Verdrahtung des Automobilfahrzeugs zu gestatten.

10. Anordnung nach einem der Ansprüche 7 bis 9, **dadurch gekennzeichnet, dass** das Kabelbündel (11) zweite Elemente für eine elektrische Verbindung (14) umfasst, die auf der Höhe des Mediums (18) intern von dem Gehäuse eingerichtet sind und ausgelegt sind, um eine elektrische Verbindung zwischen dem Kabelbündel (11) und dem funktionellen Organ (12) zu gestatten.

11. Anordnung nach einem der Ansprüche 7 bis 10, **dadurch gekennzeichnet, dass** das Gehäuse ein Motorblock ist, dessen erstes Stück (16) ein zylindrisches Gehäuse ist, und dessen zweites Stück (17) ein Ölgehäuse ist.

12. Automobilfahrzeug, umfassend mindestens eine Anordnung nach einem der Ansprüche 7 bis 11 und eine elektrische Verdrahtung, die extern von dem Gehäuse ist und elektrisch mit dem funktionellen Organ (12) mit Hilfe des mindestens einen Kabelbündels (11) verbunden ist, das von den Halteelementen (20) der Dichtung (10) in der Aufnahme (21) gehalten wird.

13. Verfahren zur Montage der Anordnung nach Anspruch 11, umfassend die folgenden Schritte:
- Positionierung des zylindrischen Gehäuses in eine Position, in der seine untere Fläche, welche die Grenzfläche mit dem Ölgehäuse bildet, nach oben orientiert ist,
- Montage des funktionellen Organs (12) in dem zylindrischen Gehäuse,
- Positionierung des Kabelbündels (11) in der Aufnahme (21),
- Positionierung der Dichtung (10) auf der Höhe der unteren Fläche des zylindrischen Gehäuses und Halten des Kabelbündels (11), das zuvor kraftschlüssig in der Aufnahme (21) montiert wurde, unter Verwendung der Halteelemente (20),
- elektrische Verbindung des Kabelbündels (11) mit dem funktionellen Organ (12),
- Positionierung und Befestigung des Ölgehäuses an dem zylindrischen Gehäuse.

## Claims

1. Device for attaching at least one electrical wiring harness (11) to a casing, the electrical wiring harness (11) being intended for electrical connection, via the casing, between a functional component (12) situated in an internal medium (18) delimited by the casing and electrical wiring arranged in a medium (19) external to the casing, **characterized in that** it comprises a seal (10) in the form of a flat gasket, intended to seal against a fluid at the interface between first and second parts (16, 17) of a casing when the first and second parts (16, 17) are fixed together, the seal (10) comprising, over all or part of its length, retaining elements (20) which are configured in such a way as to be able to retain all or part of the electrical wiring harness (11) in a receiving housing (21) formed in at least one of the said first and second parts (16, 17), the housing (21) being a recess of a size substantially equal to that of the wiring harness, give or take the assembly tolerances, thereby allowing the electrical wiring harness (11) to be mounted by force fitting.

2. Fixing device according to Claim 1, **characterized in that** the retaining elements (20) are configured in such a way as to retain the electrical wiring harness (11) removably in the housing (21).

3. Fixing device according to either one of Claims 1 and 2, **characterized in that** the retaining elements (20) are arranged in such a way as to keep at least part of the electrical wiring harness (11) on the side of the medium (18) internal to the casing.

4. Fixing device according to any one of Claims 1 to 3, **characterized in that** the seal (10) delimits a first part configured to perform the function of sealing against the fluid at the interface between the first and second parts (16, 17) of the casing and a second part that forms the retaining elements (20), the first and second parts of the seal (10) being formed in a single piece in order to form a one-piece assembly.

5. Fixing device according to Claim 4, **characterized in that** all or part of the first and second parts of the seal (10) are formed from a metalloplastic material.

6. Fixing device according to any one of Claims 1 to 5, **characterized in that** the retaining elements (20) comprise tabs extending laterally in the continuation of the first part of the seal (10) and spaced apart along all or part of the length of the seal (10) considered at the interface between the first and second parts (16, 17) of the casing which are fixed together.

7. Arrangement for a motor vehicle, comprising a casing, notably of the engine block type, having first and second parts (16, 17) fixed to one another in such a way as to enclose a fluid in a medium (18) internal to the casing, notably oil for lubricating moving parts (15) situated inside the internal medium (18), at least one functional component (12) situated in the internal medium (18), at least one device for fixing at least one electrical wiring harness (11) to a casing according to any one of the preceding claims, and at least one electrical wiring harness (11) forcibly fitted into a receiving housing (21) and retained by the retaining elements (20) of the seal (10) in the receiving housing (21) and electrically connected to the functional component (12) and to electrical wiring of the motor vehicle which is arranged in a medium (19) external to the casing in order to provide electrical connection, through the casing, between the functional component (12) and the electrical wiring.

8. Arrangement according to Claim 7, **characterized in that** the functional component (12) consists of an electronically controlled oil pump having an element for emitting and/or receiving electronic signals transmitted between the pump and the electrical wiring of the motor vehicle via the said at least one electrical wiring harness (11).

9. Arrangement according to any one of Claims 7 and 8, **characterized in that** the electrical wiring harness (11) comprises first electrical connection elements (13) arranged in the medium (19) external to the casing and configured in such a way as to allow electrical connection between the electrical wiring harness (11) and the electric wiring of the motor vehicle.

10. Arrangement according to any one of Claims 7 to 9, **characterized in that** the electrical wiring harness (11) comprises second electrical connection elements (14) arranged in the internal environment (18) of the casing and configured in such a way as to allow electrical connection between the electrical wiring harness (11) and the functional component (12).

11. Arrangement according to any one of Claims 7 to 10, **characterized in that** the casing is an engine block of which the first part (16) is a crank case upper half and the second part (17) is a crank case lower half (sump).

12. Motor vehicle comprising at least one arrangement according to any one of Claims 7 to 11 and electrical wiring external to the casing and electrically connected to the functional component (12) via the said at least on electrical wiring harness (11) held by the retaining elements (20) of the seal (10) in the receiving housing (21).

13. Method for assembling the arrangement of Claim 11, comprising the following steps:
- positioning the crank case upper half in a position in which its lower face, that constitutes the interface with the crank case lower half (sump), faces upwards,
- mounting the functional component (12) in the crank case upper half,
- positioning the electrical wiring harness (11) in the receiving housing (21),
- positioning the seal (10) on the lower face of the crank case upper half and retaining the electrical wiring harness (11) previously force-fitted into the receiving housing (21) using the retaining elements (20),
- electrically connecting the electrical wiring harness (11) to the functional component (12),
- positioning and attaching the crank case lower half (sump) with respect to the crank case upper half.
